# EUROPEAN PATENT APPLICATION

(11) **EP 4 818 534 A1**
(43) Date of publication of application: **07.10.2026**
(21) Application number: 26000018.7
(22) Date of filing: 31.03.2026
(51) Int. Cl.: F16B 12/24, F16B 12/26, A47B 95/04

(54) **A FURNITURE CONNECTOR AND A METHOD FOR JOINING FURNITURE USING THE SAME**

(30) Priority: 31.03.2025 PL 45164725
(71) Applicant: Grupa Forte S.A., 07-300 Ostrow Mazowiecka (PL)
(72) Inventor: Szyszka, Piotr, 07-300 Ostrów Mazowiecka (PL)

(57) **Abstract**

The furniture connector is characterised in that it comprises a rectangular plate (1), having, on a surface (3) thereof, at least one pair of cylindrical projections (4 and 4') arranged parallel to each other and symmetrically with respect to an axis of symmetry of the plate (1).

The method of joining furniture according to claim 6 is characterised in that the furniture units (7 and 7') are provided with holes (11) on the front surfaces (8 and 8') of their side walls (9 and 9'), situated at the same height, and the projections (4 and 4') of the furniture connector located on the plate (1) are inserted into each pair of holes.

## Description

The subject of the invention is a furniture connector for use in the furniture industry, enabling the joining of adjacent furniture frames, and a method for joining adjacent pieces of furniture using said furniture connector.

A furniture connector is known from Polish patent specification PL238669, intended for the snap-fit joining and separation of free ends of adjacent elements of ready-to-assemble furniture items, characterised in that it comprises a female socket of the first type and a male connector, simple or complex, wherein both the female socket of the first type and the male connector, on the side intended to be fitted into the furniture elements, have a shaped end which comprises at least one cylinder, optionally provided on the end faces with a cylindrical or conical flange, and the design of these elements being described in detail therein.

The object of the invention is to provide a simple and easy-to-use method of joining furniture using a furniture connector, enabling an inexperienced person to join adjacent furniture units in such a manner as to prevent them from potentially coming apart. Furthermore, the connector according to the invention is intended to ensure the correct alignment of the units - their mutual positioning. A further object of the invention is to provide a furniture connector that will enable furniture to be joined in such a manner as to prevent them from potentially sliding apart and to position them correctly.

The essence of the furniture connector according to the invention lies in the fact that it comprises a rectangular plate which has at least one pair of cylindrical projections is formed, said projections being arranged in parallel and symmetrically with respect to the plate's axis of symmetry. Advantageously, the connector further comprises plate-like offsets provided at both ends of the plate, extending towards the projections and perpendicular to the surface thereof, wherein the pairs of projections are formed on the inner surfaces of the plate-like offsets, facing each other, and their axes are arranged concentrically with respect to one another. It is also advantageous, when each projection comprises a series of circumferential anti-disengagement features on its side surface in the form of trapezoidal projections, with their wider ends directed towards the plate. Advantageously, the entire connector is made of steel.

According to the invention, the essence of the method of joining furniture using the furniture connector lies in the fact that two adjacent furniture units are provided with holes located at the same height on their front side wall surfaces, and the projections of the furniture connector, located on the plate, are then inserted into the corresponding pairs of said holes. Preferably, the furniture units are provided with holes located at the same height on the inner surfaces of their side walls, and the connector's projections, located on both plate-like offsets, are inserted into corresponding pairs of said holes.

The main advantage of the solution according to the invention is its simplicity; thanks to the use of the connector, even someone with little experience can join adjacent pieces of furniture. Furthermore, using the connector according to the invention not only shortens and significantly simplifies this process, but due to its simple design, also enables quick disassembly. In order to secure the furniture and join the pieces together with a single hand movement, the user inserts the connector into the appropriate holes in both adjacent pieces of furniture This process is repeated as necessary depending on the dimensions and number of holes. However, if the user wishes to move or relocate the furniture, particularly large wardrobes, the shape of the connector allows for easy disassembly and reassembly in a new location. Furthermore, using the connector according to the invention enables the units to be correctly aligned - that is, to be positioned correctly in relation to each other. This is achieved by assembling the units at their intended location first, levelling them, and then correctly applying the connector to ensure that the relevant surfaces of the adjacent units are properly aligned.

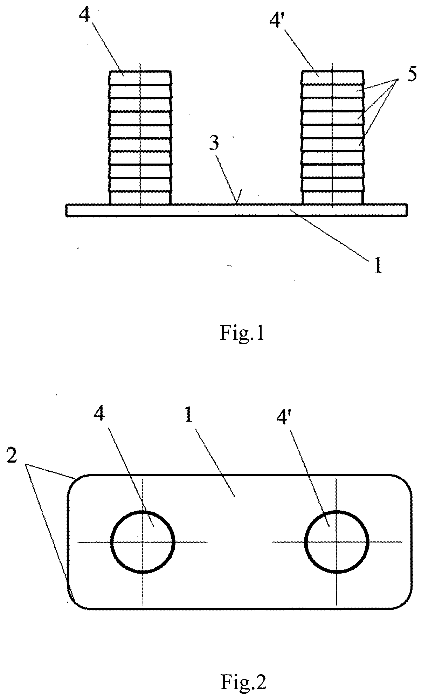

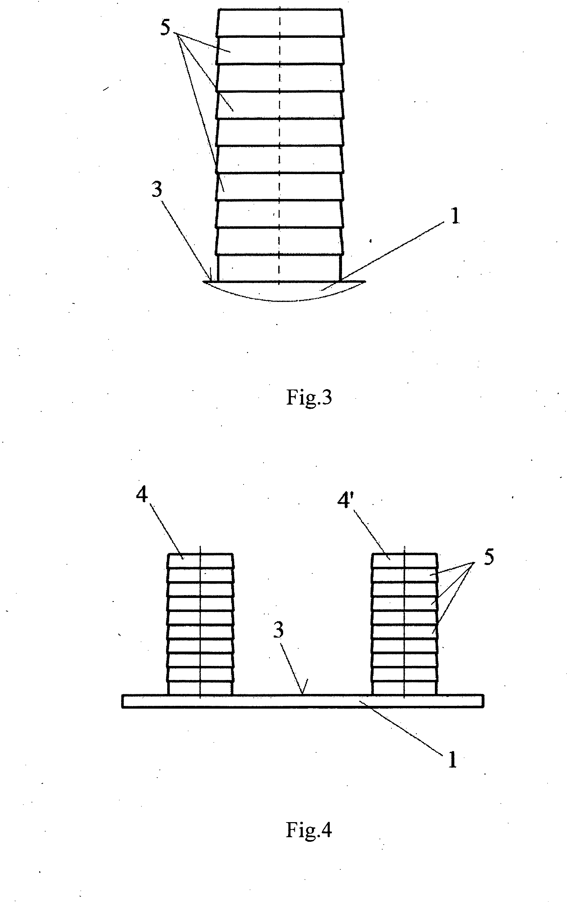

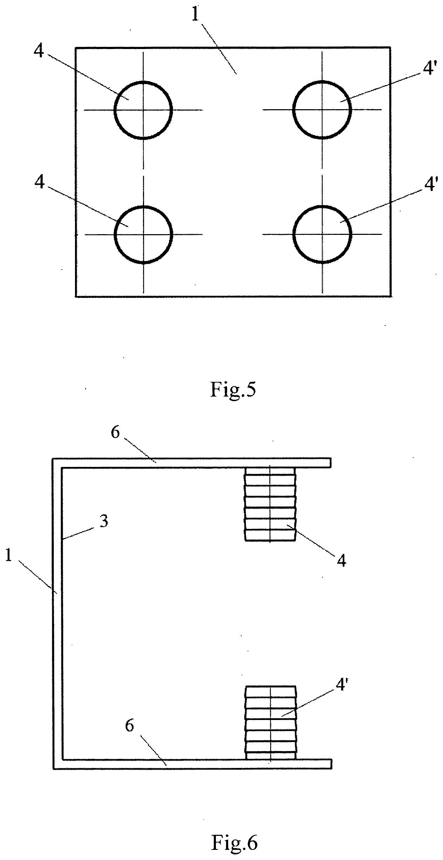

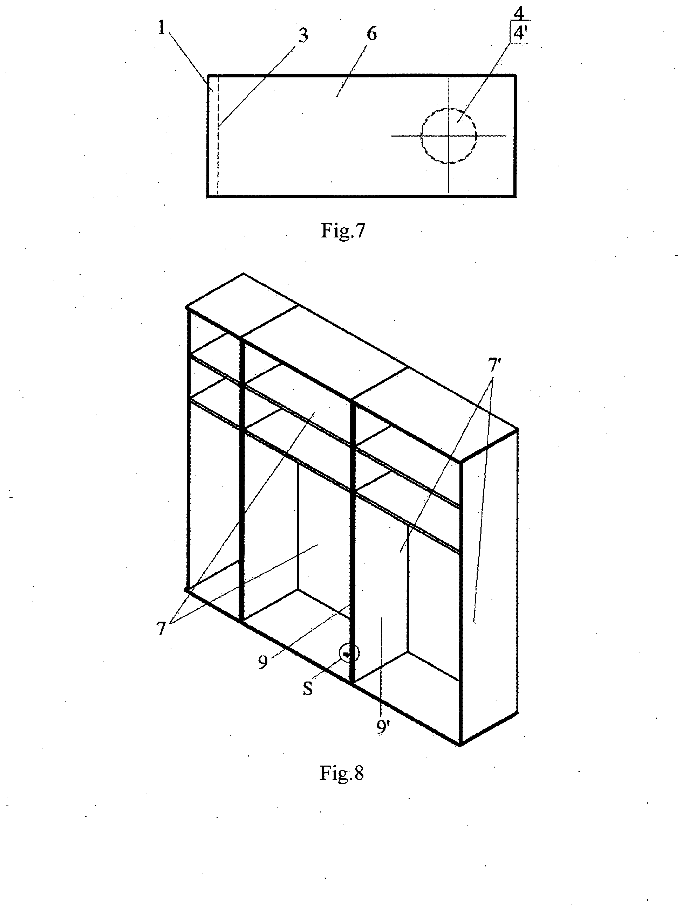

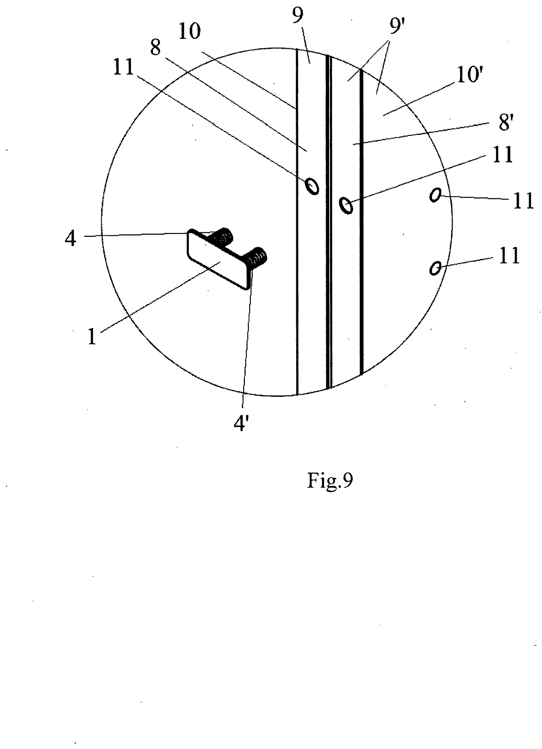

The subject of the invention is illustrated in Figures 1-9, where Figure 1 - shows the connector according to the first embodiment in a top view, Fig. 2 - shows the same connector in a rear view, Fig. 3 - shows an enlarged view of one of the connector's projections with a surface preventing it from disengaging, Fig. 4 - shows the connector according to the second embodiment in a top view, Fig. 5 - shows the same connector in a rear view, Fig. 6 - shows the connector according to the fourth embodiment in a top view, Fig. 7 - shows the same connector viewed from the side, Fig. 8 - shows an example of joining the bodies of two adjacent cabinets using a connector, and Fig. 9 - shows an enlarged detail 'S' showing the connector together with the mounting holes of both adjacent cabinet walls.

### EMBODIMENT 1

A metal connector, preferably made of steel, comprises a rectangular plate (1) having rounded corners (2). On a surface (3) of the plate (1), two cylindrical projections (4 and 4') are arranged parallel to each other and symmetrically with respect to an axis of symmetry of the plate (1). Each of the projections (4 and 4') comprises, on its side surface, a series of circumferential anti-disengagement features in the form of circumferential trapezoidal projections (5), the wider ends of which are directed towards the surface (3) of the plate (1).

### EMBODIMENT 2

The connector according to the second embodiment has a structure analogous to that of the first embodiment, with the difference that the surface (3) of the plate (1) is provided with two pairs of projections (4 and 4') arranged in a row along a longitudinal direction of the plate (1).

### EMBODIMENT 3

The connector according to the third embodiment has a structure analogous to that of the first embodiment, with the difference that instead of the rounded corners (2), the plate (1) is provided at its ends with plate-like offsets (6) extending towards the surface (3) of the plate (1) and perpendicular thereto.

### EMBODIMENT 4

The connector according to the fourth embodiment has a structure analogous to that described in the third embodiment, with the difference that the pairs of projections (4 and 4') are located on the inner surfaces of both plate-like offsets (6) and face each other, their axes being arranged concentrically with respect to one another.

In further embodiments not shown in the drawings, the metal connectors have three, four or more pairs of projections (4 and 4'), with the side surfaces of these projections being smooth or having other known shapes preventing them from disengaging.

It is evident that the connector may be made of any metallic material, provided that it meets the required strength criteria, and may also be made of a plastic material that ensures the relevant stiffness standards to be maintained.

### EMBODIMENT 5

A method of joining furniture using a furniture connector, wherein the furniture units (7 and 7') are provided with holes (11) situated at the same height on the front surfaces (8 and 8') of their side walls (9 and 9'), and wherein the projections (4 and 4') of the furniture connector, provided on the plate (1), are inserted into each pair of holes.

### EMBODIMENT 6

A method of joining furniture using a furniture connector, wherein the furniture units (7 and 7') are provided with holes (11) on the inner surfaces (10 and 10') of their side walls (9 and 9'), situated at the same height, and wherein the projections (4 and 4') of the connector, provided on both plate-like offsets (6) of the plate (1), are inserted into each pair of holes.

## Claims

1. A furniture connector **characterised in that,** it comprises a rectangular plate (1) which has, on a surface (3) thereof, at least one pair of cylindrical projections (4 and 4') being arranged in parallel and symmetrically with respect to the axis of symmetry of the plate (1).

2. The connector as claimed in claim 1, **characterised in that,** it comprises plate-like offsets (6) provided at both ends of the plate (1), extending towards the surface (3) and perpendicular thereto.

3. The connector as claimed in claim 2, **characterised in that,** the pairs of projections (4 and 4') are formed on the inner surfaces of the plate-like offsets (6), facing each other, and their axes are arranged concentrically with respect to one another.

4. The connector as claimed in any of claims 1 to 3, **characterised in that,** each projection (4 and 4') comprises a series of circumferential anti-disengagement features on its side surface in the form of trapezoidal projections (5), with their wider ends directed towards the surface (3) of the plate (1).

5. The connector as claimed in any of claims 1 to 4, **characterised in that,** the connector is made of steel.

6. A method of joining furniture using the furniture connector, **characterised in that,** the furniture units (7 and 7') are provided with holes (11) located at the same height on their front side wall surfaces, and the projections (4 and 4') of the furniture connector, located on the plate (1) are then inserted into the corresponding pairs of said holes.

7. The method of joining furniture as claimed in claim 6, **characterised in that,** the furniture units (7 and 7') are provided with the holes (11) located at the same height, and the connector's projections (4 and 4'), located on both plate-like offsets (6), are inserted into corresponding pairs of said holes.
